# FASCICULE DE BREVET EUROPEEN

(11) **EP 1 897 671 B1**
(45) Date de publication et mention de la délivrance du brevet: **27.01.2010**
(21) Numéro de dépôt: 07010607.5
(22) Date de dépôt: 29.05.2007
(51) Int. Cl.: B29C 47/12, B29C 49/00, B29C 49/48

(54) **Bloc de guidage à refroidissement intégré**
Steuerblock mit integrierter Kühlung
Guiding block with integrated cooling

(30) Priorité: 07.09.2006 FR 0607821
(43) Date de publication de la demande: 12.03.2008
(73) Titulaire: Corelco SAS, 01570 Manziat (FR)
(72) Inventeur: Courant, Alain, 01190 Chavannes sur Reyssouze (FR)
(74) Mandataire: Texier, Christian

(56) Documents cités:
- EP-A2- 1 053 856
- DE-A1- 19 700 028
- DE-C1- 19 702 647
- US-A- 3 349 156
- US-A- 3 399 427

## Description

La présente invention concerne une installation de fabrication d'un tube moulé en matière thermoplastique, par mise en forme d'une paraison à l'aide d'une pluralité de moules réalisés chacun à partir d'une paire de demi-coquilles complémentaires, aptes à défiler chacune de manière synchrone selon une chaîne sans fin de part et d'autre de la paraison. Plus précisément, l'invention se rapporte également à un bloc de guidage des demi-coquilles d'une telle installation.

Une méthode bien connue pour fabriquer des tubes plastiques annelés est d'extruder une paraison tubulaire de matériau thermoplastique qui, en sortie de l'extrudeuse, est mise en forme à l'intérieur d'une empreinte de moulage constituée par une série de moules annelés correspondants et successifs. Chaque moule est généralement obtenu par l'assemblage temporaire de deux demi-coquilles circulant chacune selon une chaîne sans fin, de part et d'autre de la paraison, et qui s'assemblent de manière jointive au niveau de la sortie de l'extrudeuse pour former une partie du tunnel de moulage.

Ainsi comprise entre les demi-coquilles, la matière thermoplastique adopte la forme du moule, par mise sous pression interne de la paraison et / ou par aspiration externe au niveau des moules.

Plus précisément, chaque demi-coquille vient s'assembler à plat et s'engager avec la demi-coquille correspondante, au début de la paraison à mouler, pour former le moule, les deux demi-coquilles se désengageant l'une de l'autre en fin moulage pour libérer le tube annelé ainsi formé après refroidissement de la matière thermoplastique.

Cette méthode est en particulier décrite plus en détails dans les documents US 3 349 156, EP 0 742 093 et EP 0 734 835 de la demanderesse.

Un tel dispositif permet de réaliser aisément un tube plastique annelé continu que l'utilisateur ou le fabricant peut découper à la longueur souhaitée ou encore une structure intermédiaire continue de pièces unitaires découpées ultérieurement.

Actuellement le refroidissement de la matière thermoplastique mise en forme à l'intérieur des moules s'effectue par air ou par circulation d'eau, soit directement à l'intérieur du moule, c'est-à-dire à l'intérieur des demi-coquilles, soit de manière indirecte par contact des moules avec une paroi de refroidissement ou refroidie, lors de leur circulation dans un bloc de guidage. Ce dernier mode de refroidissement peut être utilisé jusqu'à des épaisseurs de moules d'environ 50 mm.

Ces techniques de refroidissement sont relativement peu efficaces.

La capacité de refroidissement de l'installation détermine la longueur des chaînes sans fin et la vitesse de moulage. Par exemple, si le refroidissement n'est pas suffisamment efficace, ceci se traduit par un temps de contact plus élevé entre les moules et la paraison, pour que la matière thermoplastique atteigne la température à partir de laquelle elle peut être démoulée.

Il est donc intéressant de rechercher une manière d'améliorer et de simplifier le refroidissement de telles installations permettant une augmentation de la cadence de production.

Des solutions ont été apportées pour des installations utilisant un refroidissement par air, comme décrit dans le brevet EP 0 742 093.

Toutefois, ce problème subsiste pour les installations utilisant un refroidissement par circulation d'eau et plus généralement d'un liquide de refroidissement. Dans ce cas, le refroidissement s'effectue généralement en choisissant pour les demi-coquilles, une forme sensiblement parallélépipédique présentant une face postérieure opposée à l'empreinte qui est plane et mise en contact à plat glissant le long d'une paroi plane du bloc de guidage par l'intermédiaire de laquelle s'effectue un échange thermique avec le fluide de refroidissement circulant derrière celle-ci.

La présente invention vise à pallier les inconvénients précédemment évoqués.

Elle consiste pour cela en une installation de fabrication d'une tube moulé en matière thermo-plastique, par mise en forme d'une paraison de ladite matière, ladite installation comprenant :
a) une pluralité de blocs de guidage, dont au moins un bloc de guidage central longitudinal, assemblés les uns aux autres, en sorte de déterminer deux gorges de circulation en chaîne sans fin, ayant chacune un trajet d'avancement commun et un trajet retour séparé,
b) une pluralité de moules réalisés chacun à partir d'une paire de demi-coquilles complémentaires, aptes à défiler chacune de manière synchrone dans une dite gorge de circulation selon unedite chaîne sans fin, chaque demi-coquille venant s'assembler avec la demi-coquille correspondante, selon le trajet d'avancement, autour de la paraison, pour former un moule constitutif d'un tunnel ou empreinte de moulage ; et chaque demi-coquille étant séparée de la demi-coquille correspondante, selon un trajet retour,
c) des moyens d'avancement des demi-coquilles dans leurs gorges de circulation respectives,
d) chaque bloc de guidage longitudinal central comprenant une paroi de guidage ménageant une face plane de refroidissement, en regard du trajet d'avancement, et chaque demi-coquille comprenant une face postérieure, opposée à l'empreinte de moulage, pour un contact glissant à plat avec la face plane de refroidissement du bloc de guidage ; avec des moyens de refroidissement interne de chaque dit bloc de guidage longitudinal central,
caractérisée en ce que, sur la paroi de guidage du bloc de guidage, de l'autre côté de la face de refroidissement, est ménagée une pluralité d'évidements longitudinaux destinés à former ensemble au moins un canal de circulation turbulente d'un liquide de refroidissement.

Ainsi, en intégrant un tel circuit de refroidissement à une paroi de guidage des blocs de guidage centraux longitudinaux, la capacité d'échange thermique s'en trouve grandement améliorée. Par ailleurs, le circuit de refroidissement peut être entretenu ou subir des opérations de maintenance indépendamment des demi-coquilles et peut être remplacé facilement. L'amélioration de l'efficacité d'échange thermique permet également de réduire le débit du fluide de refroidissement et donc d'en réduire la consommation globale.

Avantageusement, le bloc de guidage central longitudinal présente une seconde paroi de guidage, ménageant une face plane en regard du trajet retour.

Avantageusement encore, la seconde paroi de guidage est une seconde paroi de refroidissement dans laquelle est ménagé une pluralité d'évidements longitudinaux destinés à former, ensemble et éventuellement avec les évidements de la première paroi de refroidissement, au moins un canal de circulation du fluide de refroidissement.

De manière préférentielle, le canal de circulation décrit, sur une moins une paroi de refroidissement, un chemin de type spirale ou serpentin.

Préférentiellement, le canal de circulation décrit un chemin périphérique autour du bloc de guidage central longitudinal.

Avantageusement, le canal de circulation décrit un chemin sensiblement hélicoïdal.

De manière avantageuse, chaque évidement formant le canal de circulation est, au moins sur la paroi de guidage correspondante, sensiblement rectiligne et ménagé à une hauteur donnée le long de celle-ci. De cette manière, il est aisé d'ajuster la longueur d'un bloc de guidage en fonction des besoins, le bloc pouvant être découpé, réduit ou allongé sans avoir à se soucier de la position du canal pour en assurer la connexion.

Avantageusement, au moins la paroi de refroidissement est réalisée en aluminium.

De manière préférentielle, chaque bloc de guidage central longitudinal possède une entrée d'alimentation et une sortie d'évacuation en liquide de refroidissement, situées sensiblement au voisinage l'une de l'autre, de préférence au niveau d'une paroi latérale du bloc de guidage sensiblement perpendiculaire à la paroi de guidage.

De manière avantageuse, les évidements des parois de refroidissement sont réalisés à partir, d'une part, de rainures ménagées dans la paroi de refroidissement par l'intermédiaire d'un évidement central périphérique du bloc de guidage, et d'autre part, d'un joint d'étanchéité apte à remplir l'évidement et à fermer lesdites rainures.

Préférentiellement, le liquide de refroidissement est de l'eau.

Préférentiellement encore, l'installation comprend une pompe apte à permettre la circulation du fluide de refroidissement dans chaque bloc de guidage.

De manière avantageuse, l'installation comprend des moyens de recyclage du fluide de refroidissement.

Avantageusement, les blocs de guidage centraux longitudinaux de l'installation sont amovibles.

Avantageusement encore, l'installation comprend des moyens d'écartement des blocs de guidage centraux longitudinaux de manière à pouvoir facilement libérer les moules situés dans le trajet d'avance en cas de blocage.

La présente invention se rapporte également à un bloc de guidage pour une installation de fabrication d'un tube moulé en matière thermoplastique à partir d'une paraison de ladite matière, comprenant au moins une paroi de guidage ménageant une face plane de refroidissement, en regard du trajet d'avancement, caractérisé en ce qu'il s'agit d'un bloc de guidage central longitudinal comprenant une pluralité d'évidements longitudinaux ménagés de l'autre côté de la face de refroidissement vers l'intérieur du bloc de guidage de manière à pouvoir former au moins un canal de circulation turbulente d'un fluide de refroidissement, ledit bloc de guidage étant apte à équiper une installation selon l'invention telle que décrite précédemment.

La mise en oeuvre de l'invention sera mieux comprise à la l'aide de la description détaillée qui est exposée ci-dessous en regard du dessin annexé dans lequel :
La figure 1 est une vue en perspective d'une installation selon l'invention.
La figure 2 est une représentation des moyens de circulation et d'entraînement formant, avec les ensembles de demi-coquilles, les chaînes sans fin équipant l'installation de la figure 1.
La figure 3 est une vue partielle en coupe de l'installation de la figure 1.
La figure 4 est une représentation éclatée en coupe de blocs de guidage selon l'invention.
La figure 5 est une vue en perspective de dessus d'un bloc de guidage selon la figure 4 avant mise en place du joint d'étanchéité.
Les figures 6 à 8 sont des représentation en coupe selon respectivement les axes VI-VI, VII-VII et VIII-VIII de la figure 5.
La figure 9 est une vue partielle en coupe d'une variante de réalisation d'une installation selon l'invention.
La figure 10 est une vue éclatée d'un bloc de guidage selon l'invention équipant l'installation de la figure 9.

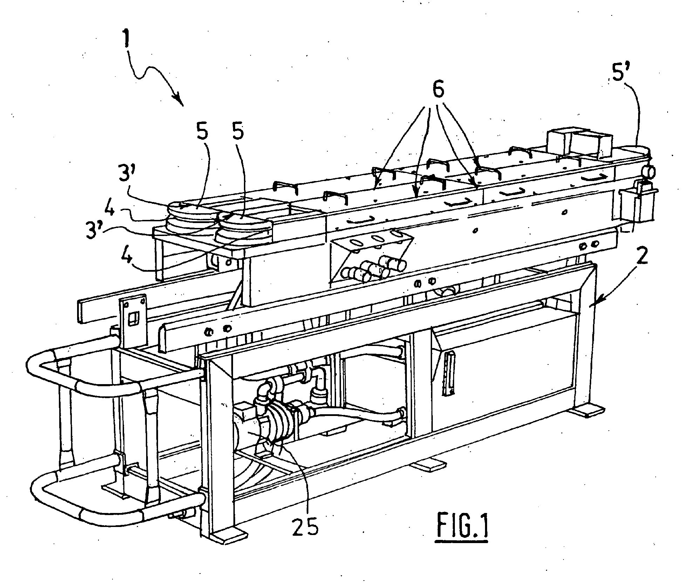

De façon connue, une installation 1 selon l'invention telle que représentée sur la figure 1 est destinée à être placée en sortie d'une extrudeuse (non représentée) délivrant une paraison tubulaire molle d'une matière thermoplastique. L'installation 1 présente un châssis 2 sur lequel est monté un ensemble pour la circulation de moules réalisés chacun à partir de deux demi-coquilles (non visibles) montées chacune selon une chaîne 3, 3' décrivant une trajectoire sans fin.

Plus précisément, les chaînes 3, 3' sont disposées de manière sensiblement parallèles entre elles et sont aptes à entraîner et guider les demi-coquilles de chaque moule de manière synchrone le long, d'une part, d'un trajet d'avancement lors duquel chaque demi-coquille vient rejoindre à plat et s'engager avec la demi-coquille correspondante autour de la paraison de matière thermoplastique pour former le moule qui, avec l'ensemble des autres moules formés le long du trajet d'avancement, vient constituer un tunnel ou empreinte de moulage, et d'autre part, un trajet retour lors duquel les demi-coquilles sont séparées et reviennent au niveau de la sortie de l'extrudeuse, avant d'amorcer un nouveau cycle de moulage.

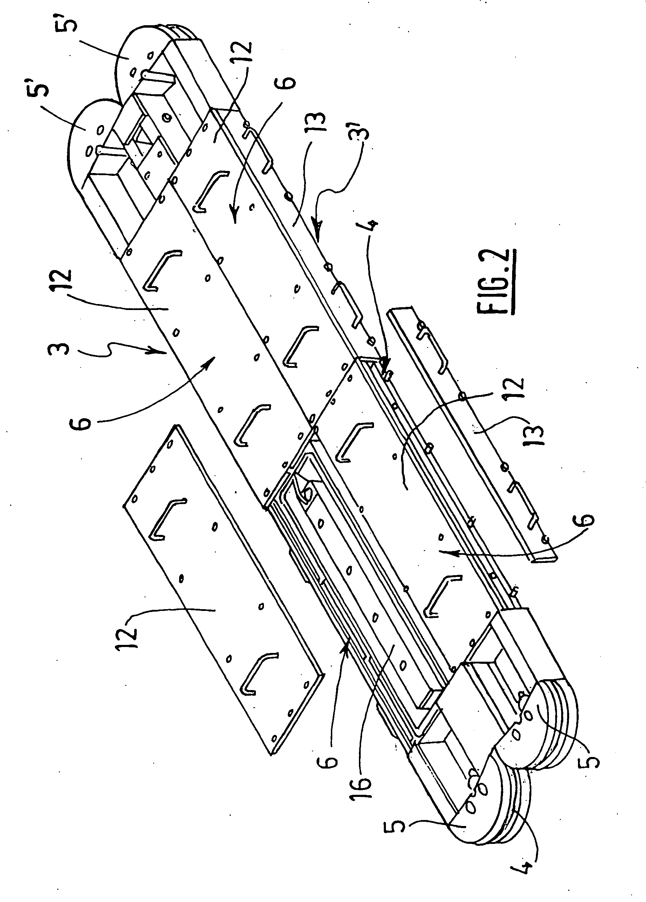

Pour ce faire, comme représenté sur la figure 2, chaque chaîne sans fin 3, 3' comprend des moyens d'entraînement et des moyens de circulation des demi-coquilles le long de chacun des trajets d'avancement et de retour.

Chaque chaîne sans fin comprend une gorge de circulation 4 périphérique permettant la circulation des demi-coquilles de chaque chaîne sans fin 3, 3' le long des trajets d'avancement et de retour correspondant.

La gorge de circulation 4 périphérique est réalisée à partir de deux blocs de guidage 5, 5' semi-circulaires disposés chacun à une extrémité de la chaîne sans fin 3, 3' et de blocs de guidage 6 centraux assurant la circulation des demi-coquilles le long des trajets d'avancement et de retour, les blocs de guidage 5, 5' semi-circulaires terminaux permettant le passage des demi-coquilles du trajet d'avancement au trajet de retour et réciproquement.

L'un des blocs de guidage 5 semi-circulaires terminaux est équipé d'une roue dentée motorisée apte à coopérer, à la manière d'une crémaillère, avec des dentelures présentes sur une face supérieure de chaque demi-coquille de manière à pousser les demi-coquilles les unes à la suite des autres et à les faire ainsi avancer à l'intérieur de la gorge de circulation 4.

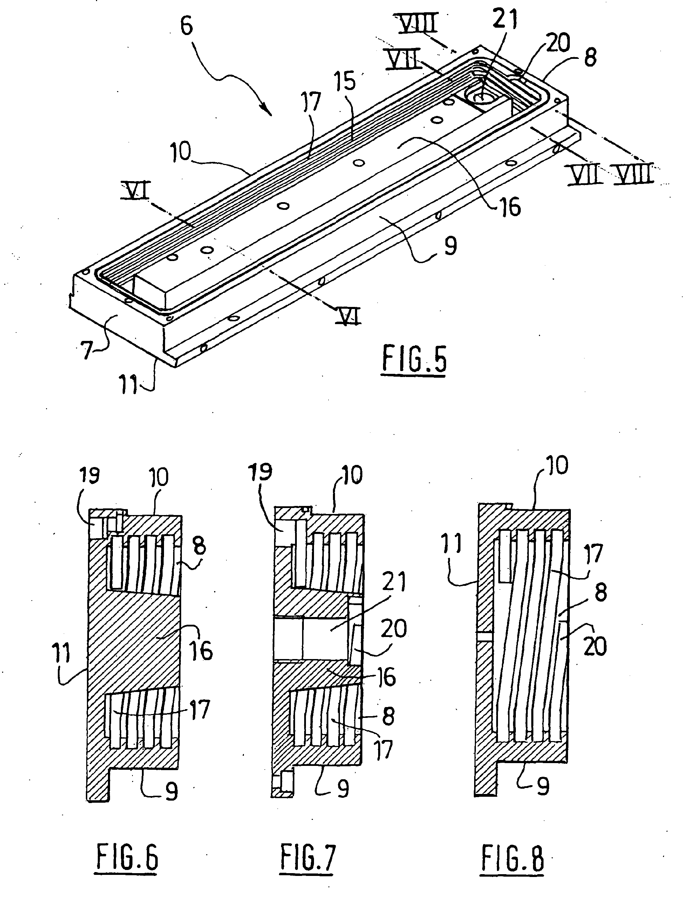

Comme montré sur la figure 5, les blocs de guidage 6 centraux se présentent sous la forme de blocs sensiblement parallélépipédiques réalisés de préférence dans un bloc en aluminium et possédant chacun deux parois latérales 7, 8 et deux parois longitudinales 9, 10 sensiblement parallèles entre elles deux à deux, ainsi qu'une paroi de fond 11 débordant au niveau des parois longitudinales, et une paroi supérieure 12 amovible formant un couvercle et débordant également au niveau des parois longitudinales. La paroi de fond 11 et le couvercle 12 forment ainsi, avec chaque paroi longitudinale 9, 10 une partie de la gorge de circulation 4 destinée à guider les demi-coquilles correspondantes, soit le long de leur trajet d'avancement, soit le long de leur trajet de retour. La partie de la gorge de circulation 4 destinée au trajet retour est fermée par un couvercle latéral 13, tandis que la gorge destinée au trajet d'avancement n'est pas équipée d'un tel couvercle latéral 13, de manière à permettre l'association des demi-coquilles avec les demi-coquille correspondante de l'autre chaîne sans fin 3, 3', le long du trajet d'avancement.

Comme représenté plus particulièrement sur la figure 2, chaque chaîne sans fin 3, 3' est réalisée à partir de deux blocs de guidage 6 tels que décrits précédemment et de bloc semi-circulaires 5, 5' permettant le retournement des demi-coquilles passant du trajet d'avancement au trajet de retour et inversement.

Selon l'invention, chaque bloc de guidage 6 comprend un circuit de refroidissement des moules.

Pour ce faire, chaque bloc de guidage présente un évidement interne périphérique 15 situé entre les parois longitudinales 9, 10 et latérales 7, 8 du bloc de guidage 6 et un épaulement central longitudinal 16.

La présence de cet évidement 15 permet la réalisation, dans les parois longitudinales 9, 10 et latérales 7, 8 du bloc de guidage 6 d'un canal intérieur 17 périphérique destinée à la circulation d'un fluide de refroidissement, en particulier de l'eau. L'évidement 15 est ensuite comblé par un joint 18 élastique permettant de fermer le canal de circulation 17 du fluide de refroidissement.

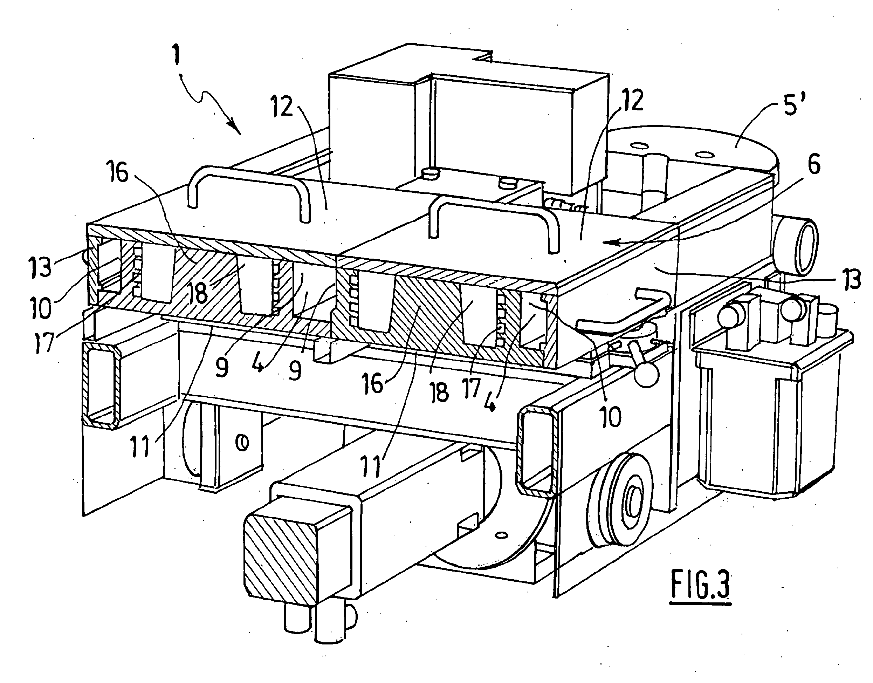

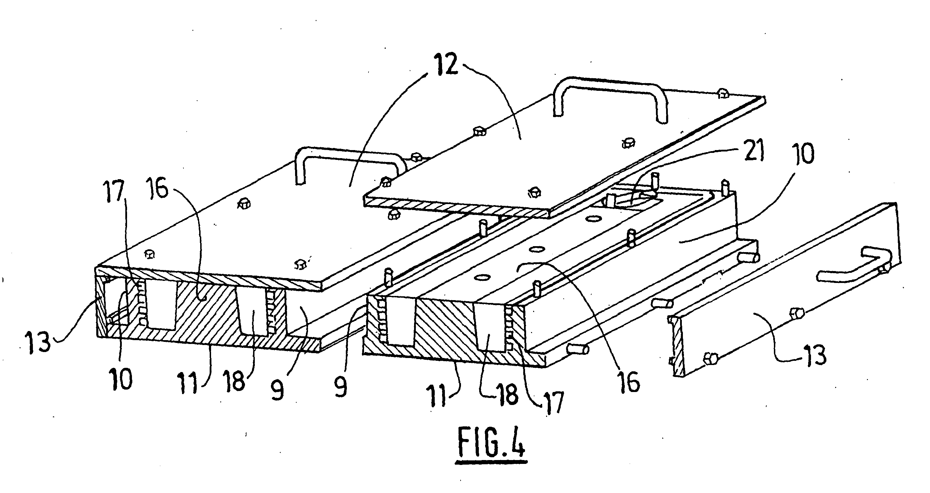

Des vues en coupe des blocs de guidage 6 sont présentées aux figures 3 et 4.

Des vues d'un bloc de guidage 6 avant la mise en place du joint 18 fermant le canal de circulation sont présentées sur les figures 5 à 8.

Plus précisément, ces figures montrent que le canal de circulation 17 est préférentiellement réalisé de manière à décrire une trajectoire sensiblement hélicoïdale passant plusieurs fois le long de chaque paroi latérale 7, 8 et longitudinale 9, 10, depuis un orifice d'entrée 19 situé dans la paroi de fond 11 au niveau d'une paroi latérale 8 jusqu'à un orifice de sortie 20 débouchant au niveau du couvercle 12 du côté de la même paroi latérale 8 et en communication avec un orifice d'évacuation 21 ménagé verticalement à travers l'épaulement central longitudinal 16, également à proximité de la même paroi latérale 8, le joint 18 étant conformé de manière à présenter un évidement superficiel permettant cette communication entre l'orifice de sortie 20 et le conduit d'évacuation 21.

Plus précisément encore, on notera que le canal de circulation 17 du fluide de refroidissement suit, le long des parois longitudinales 9, 10, un chemin rectiligne et à hauteur sensiblement constante, le passage du fluide de refroidissement à une hauteur supérieure s'effectuant au niveau d'une des parois latérales 8 du bloc de guidage 6.

Le fait que l'orifice d'entrée 19 et l'orifice de sortie 20 du canal de circulation 17 ainsi que l'orifice d'évacuation 21 soient situés du côté d'une même paroi latérale 8, permet, avec le fait que le canal de circulation 17 suive une trajectoire rectiligne et à hauteur constante le long des parois longitudinales 9, 10, de pouvoir facilement réajuster la longueur totale du bloc de guidage 6 en cas de besoin, sans avoir à modifier la connexion d'alimentation en fluide de refroidissement ni la connexion d'évacuation, ni avoir de problème avec la continuité du canal de circulation 17.

En fonctionnement, les demi-coquilles circulent le long de leur chaîne sans fin 3, 3' respective. Au début du trajet d'avancement, chaque demi-coquille vient s'engager à plat avec la demi-coquille correspondante de l'autre chaîne sans fin 3, 3', autour de la paraison tubulaire de matière thermoplastique molle à mouler sortant de l'extrudeuse à une température d'environ 80°C, cette température dépendant bien évidemment de la matière thermoplastique à mouler.

En sortie d'extrudeuse, la paraison est plaquée contre les demi-coquilles de chaque moule par un circuit d'aspiration (non visible) débouchant à l'intérieur de chaque demi-coquille. Selon un autre mode de réalisation, la paraison peut être plaquée contre les demi-coquilles par soufflage.

L'ensemble des moules est disposé selon une séquence choisie permettant de mouler un tube avec une succession de motifs désirés. Les moules peuvent également être tous identique pour produire simplement un conduit annelé en continu.

Au fur et à mesure du défilement de la paraison, la demi-coquille avance le long du trajet d'avancement à l'intérieur de la gorge de circulation 4 le long de la paroi longitudinale 9 d'un bloc de guidage 6. La circulation d'un fluide de refroidissement à l'intérieur du canal de circulation 17 du bloc de guidage 6 permet un échange thermique efficace entre la demi-coquille et le fluide de refroidissement (eau par exemple) par l'intermédiaire de la paroi longitudinale 9 en aluminium.

Par ailleurs, le canal de circulation 17 passant plusieurs fois le long de ladite paroi longitudinale, l'échange thermique s'en trouve accru. On notera également que le canal de circulation 17 possède une section transversale relativement faible et permet une circulation du fluide de refroidissement selon un régime turbulent, ce qui améliore encore les échanges thermiques avec le fluide de refroidissement.

Il en va de même sur le trajet retour de la gorge de circulation 4 où la circulation du fluide de refroidissement permet de continuer à refroidir la demi-coquille par l'intermédiaire de la deuxième paroi longitudinale 10.

La circulation du fluide de refroidissement à l'intérieur de chaque bloc de guidage 6 s'effectue par l'intermédiaire d'une pompe 25 reliée, d'une part, à chaque orifice d'entrée 19 de chaque bloc de guidage et à chaque conduit d'évacuation 21, permettant ainsi le recyclage du fluide de refroidissement.

On notera également qu'un bloc de guidage 6 selon l'invention permet un refroidissement efficace avec une circulation sans mise sous pression du fluide de refroidissement.

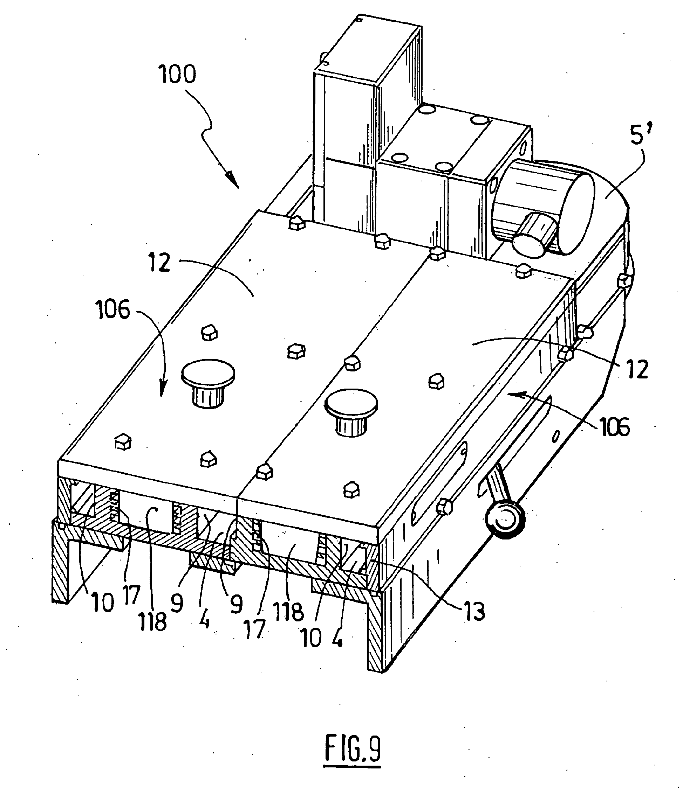

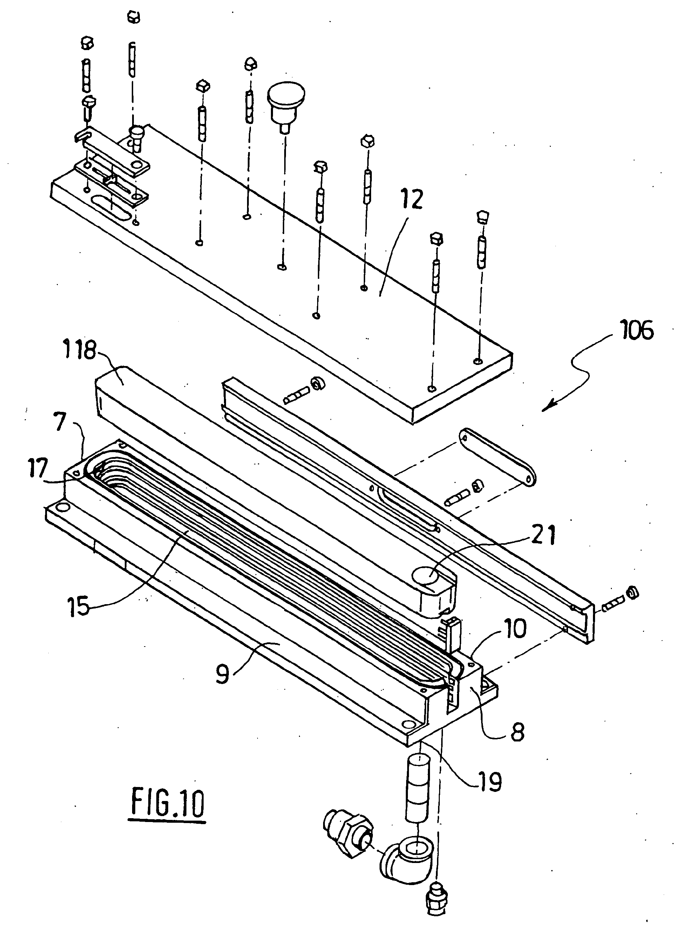

Les figures 9 et 10 présente une variante de réalisation de l'invention.

La figure 9 montre une installation 100 selon l'invention se différenciant d'une installation 1 par le fait qu'elle comprend des blocs de guidage 106 tels que représentés sur la figure 10. Un bloc de guidage 106 est principalement destiné à guider des demi-coquilles de petite taille et se différencie du bloc de guidage 6 en ce qu'il présente un évidement central 115 et ne comporte pas d'épaulement central 16. De ce fait, cet évidement central est destiné à recevoir un joint 118 complémentaire.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention. On pourra notamment prévoir qu'une seule paroi longitudinale 9, 10 forme une partie de la gorge de circulation 4, un autre bloc de guidage étant disposé parallèlement au premier bloc de guidage pour assurer le trajet retour ou d'avancement.

## Revendications

1. Installation (1) de fabrication d'un tube moulé en matière thermo-plastique, par mise en forme d'une paraison de ladite matière ladite installation comprenant :
e) une pluralité de blocs de guidage (5, 5', 6), dont au moins un bloc de guidage central (6) longitudinal, assemblés les uns aux autres, en sorte de déterminer deux gorges de circulation (4) en chaîne sans fin (3, 3'), ayant chacune un trajet d'avancement commun et un trajet retour séparé,
f) une pluralité de moules réalisés chacun à partir d'une paire de demi-coquilles complémentaires, aptes à défiler chacune de manière synchrone dans une dite gorge de circulation selon unedite chaîne sans fin, chaque demi-coquille venant s'assembler avec la demi-coquille correspondante, selon le trajet d'avancement, autour de la paraison, pour former un moule constitutif d'un tunnel ou empreinte de moulage ; et chaque demi-coquille étant séparée de la demi-coquille correspondante, selon un trajet retour,
g) des moyens d'avancement des demi-coquilles dans leurs gorges de circulation respectives,
h) chaque bloc de guidage longitudinal central comprenant une paroi de guidage (9) ménageant une face plane de refroidissement, en regard du trajet d'avancement, et chaque demi-coquille comprenant une face postérieure, opposée à l'empreinte de moulage, pour un contact glissant à plat avec la face plane de refroidissement du bloc de guidage ; avec des moyens de refroidissement interne de chaque dit bloc de guidage longitudinal central,
**caractérisée en ce que**, sur la paroi de guidage du bloc de guidage, de l'autre côté de la face de refroidissement, est ménagée une pluralité d'évidements longitudinaux destinés à former ensemble au moins un canal de circulation (17) turbulente d'un liquide de refroidissement.

2. Installation (1) selon la revendication 1, **caractérisée en ce qu'**au moins un bloc de guidage central (6) longitudinal comprend un seconde paroi de guidage (10) ménageant une face plane en regard du trajet retour.

3. Installation (1) selon la revendication 2, **caractérisée en ce que** la seconde paroi de guidage (9) est une seconde paroi de refroidissement dans laquelle est ménagé une pluralité d'évidements longitudinaux destinés à former, ensemble et éventuellement avec les évidements longitudinaux de la première paroi de refroidissement, au moins un canal de circulation (17) d'un fluide de refroidissement.

4. Installation (1) selon l'une quelconque des revendications 1 à 3, **caractérisée en ce que** le canal de circulation (17) décrit, sur au moins une paroi de refroidissement (9, 10), un chemin de type spirale ou serpentin.

5. Installation (1) selon l'une quelconque des revendications 1 à 4, **caractérisée en ce que** le canal de circulation (17) décrit un chemin périphérique autour du bloc de guidage central (6).

6. Installation (1) selon la revendication 5, **caractérisé en ce que** le canal de circulation (17) décrit un chemin sensiblement hélicoïdal.

7. Installation (1) selon l'une quelconque des revendications 1 à 6, **caractérisée en ce que** chaque évidement formant le canal de circulation (17) est, au moins sur la paroi de guidage (9, 10) correspondante sensiblement rectiligne et ménagé à une hauteur donnée le long de celle-ci.

8. Installation (1) selon l'une quelconque des revendications 1 à 7, **caractérisée en ce qu'**au moins la paroi de refroidissement (9, 10) est réalisée en aluminium.

9. Installation (1) selon l'une quelconque des revendications 1 à 8, **caractérisée en ce que** chaque bloc de guidage central (6) longitudinal possède une entrée d'alimentation (19) et une sortie d'évacuation (21) en liquide de refroidissement, situées sensiblement au voisinage l'une de l'autre, de préférence au niveau d'une paroi latérale (8) du bloc de guidage sensiblement perpendiculaire à la paroi de guidage.

10. Installation (1) selon l'une quelconque des revendications 1 à 9, **caractérisée en ce que** les évidements des parois de refroidissement (9, 10) sont réalisés à partir, d'une part, de rainures ménagées dans la paroi de refroidissement par l'intermédiaire d'un évidement central (15) périphérique du bloc de guidage (6), et d'autre part, d'un joint d'étanchéité (18) apte à remplir l'évidement et à fermer lesdites rainures.

11. Installation (1) selon l'une quelconque des revendications 1 à 10, **caractérisée en ce que** le liquide de refroidissement est de l'eau.

12. Installation (1) selon l'une quelconque des revendication 1 à 11 **caractérisée en ce qu'**elle comprend une pompe (25) apte à permettre la circulation du fluide de refroidissement dans chaque bloc de guidage (6).

13. Installation (1) selon l'une quelconque des revendications 1 à 12, **caractérisée en ce qu'**elle comprend des moyens de recyclage du fluide de refroidissement.

14. Installation (1) selon l'une quelconque des revendications 1 à 13, **caractérisée en ce que** les blocs de guidage centraux (6) longitudinaux de l'installation sont amovibles.

15. Installation (1) selon l'une quelconque des revendications 1 à 14, **caractérisée en ce qu'**elle comprend des moyens d'écartement des blocs de guidage centraux (6) longitudinaux de manière à pouvoir facilement libérer les moules situés dans le trajet d'avancement en cas de blocage.

16. Bloc de guidage (6) pour une installation (1) de fabrication d'un tube moulé en matière thermoplastique à partir d'une paraison de ladite matière, comprenant au moins une paroi de guidage (9) ménageant une face plane de refroidissement, en regard du trajet d'avancement, **caractérisé en ce qu'**il s'agit d'un bloc de guidage central longitudinal comprenant une pluralité d'évidements longitudinaux ménagés de l'autre côté de la face de refroidissement vers l'intérieur du bloc de guidage de manière à pouvoir former au moins un canal de circulation (17) turbulente d'un fluide de refroidissement, ledit bloc de guidage étant apte à équiper une installation selon l'une quelconque des revendications 1 à 15.

## Claims

1. An installation (1) for making a tube molded of thermoplastic material, by shaping a parison of said material said installation comprising:
e) a plurality of guiding blocks (5, 5', 6), including at least one longitudinal central guiding block (6), assembled together so as to determine two circulation grooves (4) in an endless chain (3, 3'), each having a common feed path and a separate return path,
f) a plurality of molds, each made from a pair of complementary die halves, adapted to respectively move synchronously inside one said circulation groove along one said endless chain, each die halve assembling with the corresponding die halve, along the feed path, around the parison, in order to form a mold composed of a molding tunnel or cavity; and each die halve being separated from the corresponding die halve, along a return path,
g) means for feeding die halves inside their respective circulation grooves,
h) each longitudinal central guiding block comprising a guiding wall (9) providing a planar cooling side, opposite the feed path, and each die halve comprising a back side, opposing the molding cavity, for a flat sliding contact with the planar cooling side of the guiding block; with internal cooling means of each said longitudinal central guiding block,
**characterized in that**, on the guiding wall of the guiding block, on the other side of the cooling face, a plurality of longitudinal cutouts designed for forming together at least one turbulent circulation channel (17) of a cooling liquid is arranged.

2. The installation (1) according to claim 1, **characterized in that** at least one longitudinal central guiding block (6) comprises a second guiding wall (10) providing a planar face opposite the return path.

3. The installation (1) according to claim 2, **characterized in that** the second guiding wall (9) is a second cooling wall, in which a plurality of longitudinal cutouts is arranged, designed for forming together, and possibly with the longitudinal cutouts of the first cooling wall, at least one circulation channel (17) of a cooling liquid.

4. The installation (1) according to any of claims 1 to 3, **characterized in that** the circulation channel (17) describes, on at least one cooling wall (9, 10), a spiral or coil-like path.

5. The installation (1) according to any of claims 1 to 4, **characterized in that** the circulation channel (17) describes a peripheral path around the central guiding block (6).

6. The installation (1) according to claim 5, **characterized in that** the circulation channel (17) describes a substantially helical path.

7. The installation (1) according to any of claims 1 to 6, **characterized in that** each cutout forming the circulation channel (17) is, at least on the corresponding guiding wall (9, 10), substantially straight and provided up to a given height therealong.

8. The installation (1) according to any of claims 1 to 7, **characterized in that** at least the cooling wall (9, 10) is made of aluminum.

9. The installation (1) according to any of claims 1 to 8, **characterized in that** each longitudinal central guiding block (6) has a cooling liquid supply input (19) and discharge output (21), located substantially close to each other, preferably at a side wall (8) of the guiding block substantially perpendicular to the guiding wall.

10. The installation (1) according to any of claims 1 to 9, **characterized in that** the cutouts of the cooling walls (9, 10) are made, on the one hand, from slots provided inside the cooling wall via a peripheral central cutout (15) of the guiding block (6), and on the other hand, from a seal (18) adapted to fill the cutout and close said slots.

11. The installation (1) according to any of claims 1 to 10, **characterized in that** the cooling liquid is water.

12. The installation (1) according to any of claims 1 to 11 **characterized in that** it comprises a pump (25) adapted to allow for the circulation of the cooling liquid inside each guiding block (6).

13. The installation (1) according to any of claims 1 to 12, **characterized in that** it comprises means for recycling the cooling liquid.

14. The installation (1) according to any of claims 1 to 13, **characterized in that** the longitudinal central guiding blocks (6) of the installation are detachable.

15. The installation (1) according to any of claims 1 to 14, **characterized in that** it comprises means for removing the longitudinal central guiding blocks (6) so as to allow for the molds located on the feed path to be released easily in case of jamming.

16. A guiding block (6) for an installation (1) for making a tube molded of thermoplastic material from a parison of said material, comprising at least one guiding wall (9) providing a planar cooling face, opposite the feed path, **characterized in that** it is a longitudinal central guiding block comprising a plurality of longitudinal cutouts provided on the other side of the cooling face inwards of the guiding block so as to be able to form at least one turbulent circulation channel (17) of a cooling liquid, said guiding block being adapted to be fitted to an installation according to any of claims 1 to 15.

## Patentansprüche

1. Einrichtung (1) zum Herstellen eines aus thermoplastischem Material geformten Rohrs durch Formen eines Vorformlings aus dem Material, wobei die Einrichtung folgendes umfasst:
e) eine Vielzahl von Führungsblöcken (5, 5', 6), darunter mindestens ein mittlerer Längsführungsblock (6) , die derart zusammengefügt sind, dass sie zwei Umlaufrinnen (4) in einer Endloskette (3, 3') bilden, die jeweils einen gemeinsamen Vorwärtsweg und einen getrennten Rückwärtsweg aufweist,
f) eine Vielzahl von Pressformen, die jeweils aus einem Paar sich ergänzender Matrizen ausgebildet sind und dazu geeignet sind, um jeweils synchron in einer Umlaufrinne in einer Endloskette zu laufen, wobei sich jede Matrize mit der entsprechenden Matrize auf dem Vorwärtsweg um den Vorformling herum zusammenfügt, um eine Pressform zu bilden, die aus einem Formtunnel oder Formhohlraum besteht; und wobei jede Matrize sich von der entsprechenden Matrize auf einem Rückwärtsweg trennt,
g) Mittel zum Vorschieben der Matrizen in ihren jeweiligen Umlaufrinnen,
h) wobei jeder mittlere Längsführungsblock eine Führungswand (9) umfasst, die gegenüber dem Vorwärtsweg eine ebene Kühlfläche bereitstellt, und jede Matrize eine Rückseite umfasst, die dem Formhohlraum gegenüberliegt, für einen flachen Gleitkontakt mit der ebenen Kühlfläche des Führungsblocks; mit inneren Kühlmitteln jedes mittleren Längsführungsblocks,
**dadurch gekennzeichnet, dass** auf der Führungswand des Führungsblocks auf der anderen Seite der Kühlfläche eine Vielzahl von Längsaussparungen eingerichtet ist, die dazu gedacht sind, zusammen mindestens einen Wirbelumlaufkanal (17) einer Kühlflüssigkeit zu bilden.

2. Einrichtung (1) nach Anspruch 1, **dadurch gekennzeichnet, dass** mindestens ein mittlerer Längsführungsblock (6) eine zweite Führungswand (10) umfasst, die eine ebene Fläche gegenüber dem Rückwärtsweg bereitstellt.

3. Einrichtung (1) nach Anspruch 2, **dadurch gekennzeichnet, dass** die zweite Führungswand (9) eine zweite Kühlwand ist, in der eine Vielzahl von Längsaussparungen eingerichtet ist, die dazu gedacht sind, zusammen und gegebenenfalls mit den Längsaussparungen der ersten Kühlwand mindestens einen Umlaufkanal (17) einer Kühlflüssigkeit zu bilden.

4. Einrichtung (1) nach einem der Ansprüche 1 bis 3, **dadurch gekennzeichnet, dass** der beschriebene Umlaufkanal (17) auf mindestens einer Kühlwand (9, 10) einen spiralförmigen oder geschlängelten Weg beschreibt.

5. Einrichtung (1) nach einem der Ansprüche 1 bis 4, **dadurch gekennzeichnet, dass** der Umlaufkanal (17) einen Umfangsweg um den mittleren Führungsblock (6) herum beschreibt.

6. Einrichtung (1) nach Anspruch 5, **dadurch gekennzeichnet, dass** der Umlaufkanal (17) einen im Wesentlichen schraubenförmigen Weg beschreibt.

7. Einrichtung (1) nach einem der Ansprüche 1 bis 6, **dadurch gekennzeichnet, dass** jede Aussparung, die den Umlaufkanal (17) bildet, mindestens auf der entsprechenden Führungswand (9, 10) im Wesentlichen geradlinig und bis auf eine bestimmte Höhe daran entlang eingerichtet ist.

8. Einrichtung (1) nach einem der Ansprüche 1 bis 7, **dadurch gekennzeichnet, dass** mindestens die Kühlwand (9, 10) aus Aluminium hergestellt wird.

9. Einrichtung (1) nach einem der Ansprüche 1 bis 8, **dadurch gekennzeichnet, dass** jeder mittlere Längsführungsblock (6) einen Versorgungseingang (19) und einen Entleerungsausgang (21) für Kühlflüssigkeit besitzt, die sich im Wesentlichen nahe nebeneinander befinden, bevorzugt an einer Seitenwand (8) des Führungsblocks, im Wesentlichen rechtwinklig zu der Führungswand.

10. Einrichtung (1) nach einem der Ansprüche 1 bis 9, **dadurch gekennzeichnet, dass** die Aussparungen der Kühlwände (9, 10) einerseits aus Nuten, die in der Kühlwand über eine mittlere Umfangsaussparung (15) des Führungsblocks (6) eingerichtet sind, und andererseits aus einer Dichtung (18), die dazu geeignet ist, die Aussparung auszufüllen und die Nuten zu schließen, ausgebildet sind.

11. Einrichtung (1) nach einem der Ansprüche 1 bis 10, **dadurch gekennzeichnet, dass** die Kühlflüssigkeit Wasser ist.

12. Einrichtung (1) nach einem der Ansprüche 1 bis 11 **dadurch gekennzeichnet, dass** sie eine Pumpe (25) umfasst, die dazu geeignet ist, den Umlauf der Kühlflüssigkeit in jedem Führungsblock (6) zu ermöglichen.

13. Einrichtung (1) nach einem der Ansprüche 1 bis 12, **dadurch gekennzeichnet, dass** sie Mittel zum Umpumpen der Kühlflüssigkeit umfasst.

14. Einrichtung (1) nach einem der Ansprüche 1 bis 13, **dadurch gekennzeichnet, dass** die mittleren Längsführungsblöcke (6) der Einrichtung abnehmbar sind.

15. Einrichtung (1) nach einem der Ansprüche 1 bis 14, **dadurch gekennzeichnet, dass** sie Mittel zum Entfernen der mittleren Längsführungsblöcke (6) umfasst, damit die Pressformen, die sich auf dem Vorwärtsweg befinden, bei Verklemmung leicht freizusetzen sind.

16. Führungsblock (6) für eine Einrichtung (1) zum Herstellen eines aus thermoplastischem Material geformten Rohrs aus einem Vorformling aus dem Material, umfassend mindestens eine Führungswand (9), die eine ebene Kühlfläche gegenüber dem Vorwärtsweg bereitstellt, **dadurch gekennzeichnet, dass** er ein mittlerer Längsführungsblock ist, der eine Vielzahl von Längsaussparungen umfasst, die auf der anderen Seite der Kühlfläche zum Innern des Führungsblocks bereitgestellt werden, damit mindestens ein Wirbelumlaufkanal (17) einer Kühlflüssigkeit gebildet werden kann, wobei der Führungsblock dazu geeignet ist, um eine Einrichtung nach einem der Ansprüche 1 bis 15 auszustatten.
